# EUROPEAN PATENT APPLICATION

(11) **EP 2 667 615 A1**
(43) Date of publication of application: **27.11.2013**
(21) Application number: 12305559.2
(22) Date of filing: 22.05.2012
(51) Int. Cl.: H04N 9/31, G06T 7/00, H04N 13/00

(54) **Method and apparatus for removing distortions when projecting images on real surfaces**

(71) Applicant: ST-Ericsson SA, 1228 Plan-les-Ouates (CH)
(72) Inventor: Cuisenier, Laurent, 38300 BOURGOIN JALLIEU (FR); Roffet, Frederique, 38500 COUBLEVIE (FR)
(74) Representative: Hirsch & Associés

(57) **Abstract**

A projection unit for projecting an image onto a projection surface, comprising a scene calibration unit (SCU) adapted to generate a 3D model (M) of the projection surface, a geometrical compensation system (GCS) for acquiring an original image (ISo) and applying corrective distortions to this original image to generate a compensated image (ISc), these corrective distortions being computed from the 3D model (M), and a projector sub-system for projecting the compensated image (ISc) onto the projection surface.

## Description

### TECHNICAL FIELD

The embodiments of the invention relate to the field of apparatuses comprising projectors, having a function of automatically correcting distortion of images to be projected when projecting the images on any projection surfaces. In particular, it concerns apparatuses comprising pico-projectors e.g. smartphones, tablets or in general handheld devices and any apparatus of relative small size and able to embed computing functions.

### BACKGROUND

The market trend is to embed projectors inside smartphones, tablets and other handheld devices. As they are constrained by the embedment within a handheld device in aspects such as size, weight, energy consumption, they are referred to as "pico-projectors". They however have the same basic function of projecting images on a projection surface as regular projectors.

These projected images are information provided by other circuits of the handheld devices and could be of different natures, either still images (photographs, slides, etc.) or moving images (video, animation, etc.).

This "pico-projector"/projector function added to the handheld devices is convenient for the users, since the user becomes able to project information anywhere as long as the user can find a projection surface.

However, the configuration of the projector and the projection surface is not ideal. More precisely, as the projector is manually manipulated, it is in general inclined with regard to the projection surface.

In addition, the user may not find a straight wall, but may need (or wish) to use any projection surfaces of various shape. It may be a wall of various shape, but it could also be the ground, a rock, or whatever the user may find around him or her, indoor or outdoor, in a real-life environment.

For these two reasons at least, a distortion is generated on the projected images. In some cases, this distortion may be harmful to user's experience and jeopardize the use of the pico-projector and related services.

Hence there is a need for a solution permitting to remove distortion when projecting images on any "real-life" projection surface.

In the prior art, some partial solutions have been proposed.

For instance, some solutions aim at solving the issue of keystone (or trapezoidal) distortion, i.e. due to a bad alignment of the projector with the projection surface. Such solutions are for example described in US 6416186 and US 7303285.

The solution described in US 7144115 proposes a refinement by estimating the distance between the projector and the projection screen based on a camera or, in one embodiment, by using a pair of stereoscopic cameras.

Their drawback is that they solve only a part of the general problem and do not address the distortion generated by the shape of the projection surface.

Another solution has been described in US 7857461. In this piece of prior art, the projector comprises a camera to capture the projected image and compare it with the original image. A correction is then calculated on the basis of a shape model associated with the projection surface.

The drawback of this solution is that it is based on a database of shape models. It is therefore limited to the amount of shapes stored in the database, and, in anyway, to shapes for which a model can be designed by a mathematical equation.

Still another solution is described by US 2009/0190046. It is based also on the use of a camera to capture the projected image for comparing it with the original image. However, this solution aims at correcting keystone distortion and a few of other types of distortion. It does not address the correction of distortion due to the shape of the projection surface.

### SUMMARY

An object of the embodiments is to alleviate at least partly the above mentioned drawbacks. More particularly, the embodiments aim at improving the correction of the distortion especially when the image is projected in projection surface of any shape.

This is achieved with a method for projecting an image onto a projection surface, this method comprising the steps of:
- generating a 3D model of said projection surface;
- acquiring an original image,
- applying corrective distortions to said original image to generate a compensated image, said corrective distortions being computed from said 3D model, and,
- projecting said compensated image onto said projection surface, from a projector subsystem.

According to the embodiments, the corrective distortions may be computed from an inverse model of the 3D model.

The corrective distortions may consist in computing the projection of the original image onto a virtual surface defined by this inverse model.

Furthermore, the 3D model may be generated from depth view information of said projection surface and a distance between the projector subsystem and the projection surface. This depth view information may be computed from data provided by two stereoscopic images of the projection surface. The two stereoscopic images may be acquired by two cameras embedded in the projection unit. These two cameras may be aligned with the projector subsystem within a same projection unit.

Another object is a projection unit for projecting an image onto a projection surface. This projection unit comprises:
- a scene calibration unit adapted to generate a 3D model of said projection surface
- a geometrical compensation system for acquiring an original image and applying corrective distortions to said original image to generate a compensated image, said corrective distortions being computed from said 3D model, and
- A projector sub-system) for projecting said compensated image onto said projection surface.

According to the embodiments, the geometrical compensation system may be adapted to compute the corrective distortions from an inverse model of said 3D model.

The projection unit may further comprise:
- two cameras adapted to acquire two stereoscopic images of the projection surface, and
- a stereoscopic processing unit for computing depth view information of the projection surface from data provided by the two stereoscopic images, and
- a scene calibration unit is then adapted to generate the 3D model from the depth view information and a distance between the projector unit and the projection surface.

The geometrical compensation system comprises an inverse geometry generation unit to compute an inverse model of said 3D model and an inverse projection unit to compute the projection of said original image onto a virtual surface defined by said inverse model.

The two cameras may be aligned with the projector subsystem.

Another object of the embodiments is a mobile terminal comprising such a projection unit, as well as:
- a computer program product comprising a computer readable medium, having thereon a computer program comprising program instructions, the computer program being loadable into a data-processing unit and adapted to cause execution of the method previously described when the computer program is run by the data-processing unit, and
- a data storage medium having recorded thereon a computer program comprising instructions for performing this method.

The generation of a 3D model of the projection surface has the effect that the projection unit is able to compute the distortions of the image onto the surface before to actually project it.

One advantage of this effect is that it becomes possible for the projection unit to compensate this distortion by distorting the original image in an opposite way, so that the final displayed image is in accordance with the original image.

Another advantage of this effect is that the 3D model is fully based on measurements and does not need any pre-configuration. The invention can therefore adapt to any shapes of projection surface, and is not limited to certain types of shapes. It can also dynamically adapt to a real environment without many steps or software adaptations.

Further features and advantages of the embodiments will appear from the following description, given as non-limiting examples, with reference to the accompanying drawings listed hereunder.

### BRIEF DESCRIPTION OF THE DRAWINGS

Fig. 1 shows a communication terminal according to an embodiment.
Figs. 2a and 2b illustrate an example compared with a projection unit according to the prior art, and with a projection unit according to the embodiments.
Fig. 3 shows a flowchart of a method for projecting an image, in accordance with an embodiment;
Fig. 4 shows another flowchart corresponding to an embodiment.
Fig. 5 shows a block diagram illustrating an exemplary functional architecture in accordance with an embodiment.
Fig. 6 shows a more detailed view of a block of the figure 5, according to an embodiment.
Fig. 7 illustrates a possible embodiment of the steps relative to the computation of the depth view information.
Fig. 8 shows a mesh for an example 3D model.
Fig. 9 illustrates a step of a process for computing an inverse 3D model.
Figs. 10a, 10b, 10c illustrates a generation of a compensated image, according to an embodiment.

### DETAILED DESCRIPTION

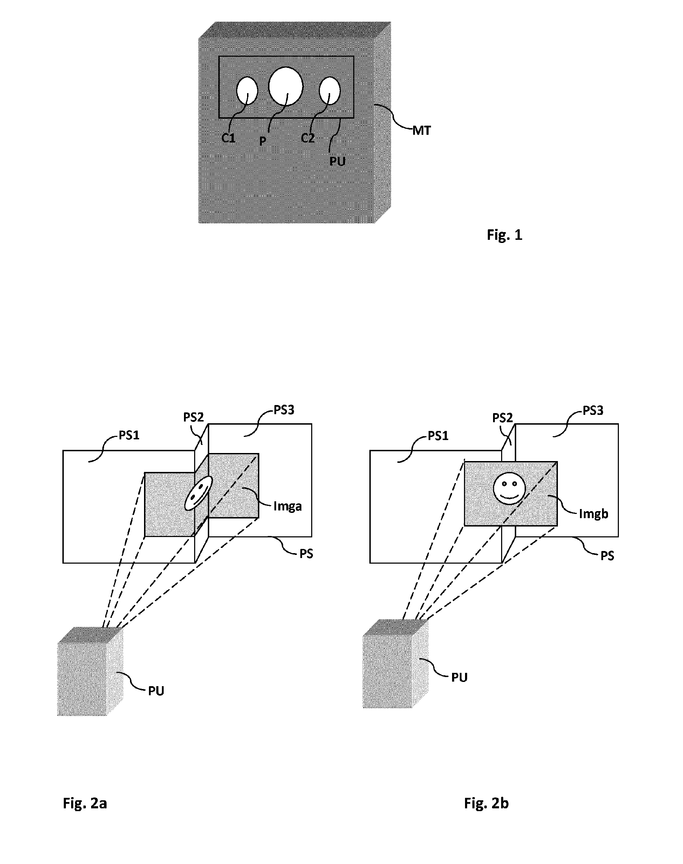

The mobile terminal MT illustrated in figure 1 is a relevant application of the embodiments. It comprises a projection unit PU, as well as other circuits and units that are not represented on figure 1 for clarity of the figure (like keyboard, screen, memories, radio circuits etc.).

This mobile terminal can be a smartphone, a tablet, a personal digital assistant (PDA), or any other devices aiming at being hand-held by a user. The invention can also apply to other types of devices, for instance office devices like regular projectors, laptop computers, etc.

Although one advantage of the embodiments is to adapt to any projection surface that the user of a mobile terminal may be confronted with, the invention may also apply to fixed terminals, like for instance desktop computers.

In this application of the invention, the projection unit PU comprises a projector or pico-projector P and two cameras C1, C2.

According to one embodiment, these two cameras and the projector are aligned. In the example of figure 1, the alignment is horizontal and according to one dimension of the projection unit PU, but other configurations are feasible.

In other embodiments, the projection unit PU can comprise other sensors in addition or in replacement of the two cameras C1, C2. As it will be shown later, the sensors embedded within this projection unit PU should provide data enabling the computing of depth view information of the projection surface.

For instance, these sensors can be a camera associated with a structured-light emitter. The structured light may be in the infrared domain like the product "Kinect" of the company Microsoft.

It can also be a single camera associated with an accelerometer and with software enabling the computing of several images of the same scene while the projection unit PU is moving in the space.

It can also be a set of more than two cameras. Compared with regular stereoscopic vision, this embodiment may provide advantages like verifying from a third camera's image the depth view information deduced from a pair, etc.

Other solutions are possible, and the invention should not be understood as limited to one of these embodiments.

The scene represented in figures 2a and 2b shows the projection unit PU and a projection surface PS. The projection unit PU is seen from the rear so that the cameras (or other sensors, according to the embodiments) and projector P are not visible.

The projection surface PS is made of three connected planar sections PS1, PS2, PS3. This surface can be a wall, the ground, a rock etc. It can have a fine-grained or a coarse-grained texture.

In figure 2a, a projection unit according to the prior art is projecting an image on the projection surface PS. It appears clearly that, due to the non-planar shape of the projection surface PS, the resulting image Imga is distorted.

The figure 2b shows the same image projected on the same projection surface PS but by a projection unit PU according to the embodiments. The resulting image Imgb appears to be not distorted.

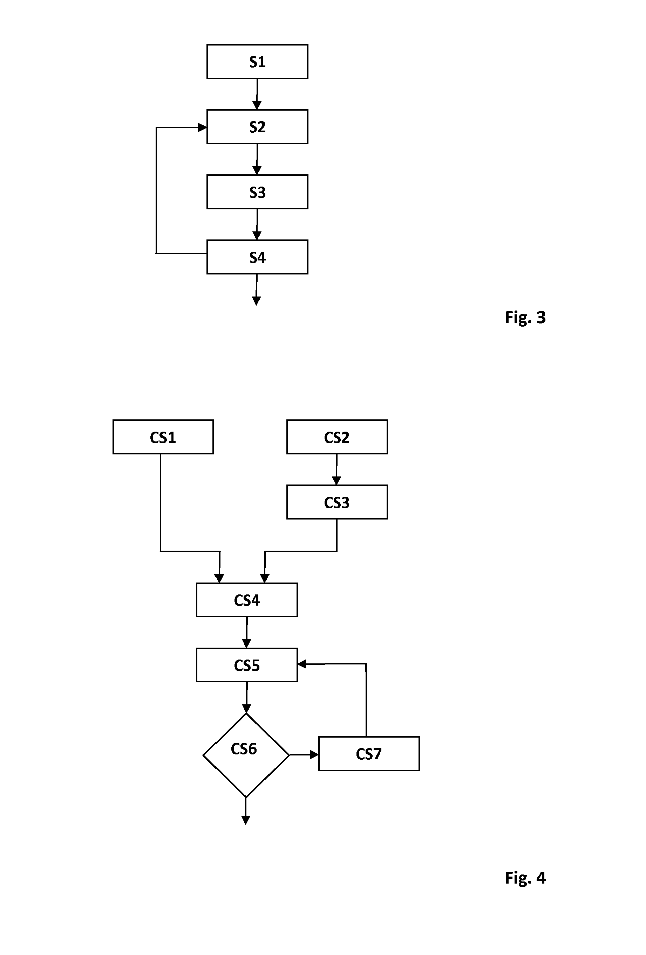

The figure 3 shows a flowchart representing the method according to an embodiment.

A step S1 consists in generating a 3D model M of the projection surface PS.

According to the embodiment, this 3D model can be generated from depth view information of the projection surface PS.

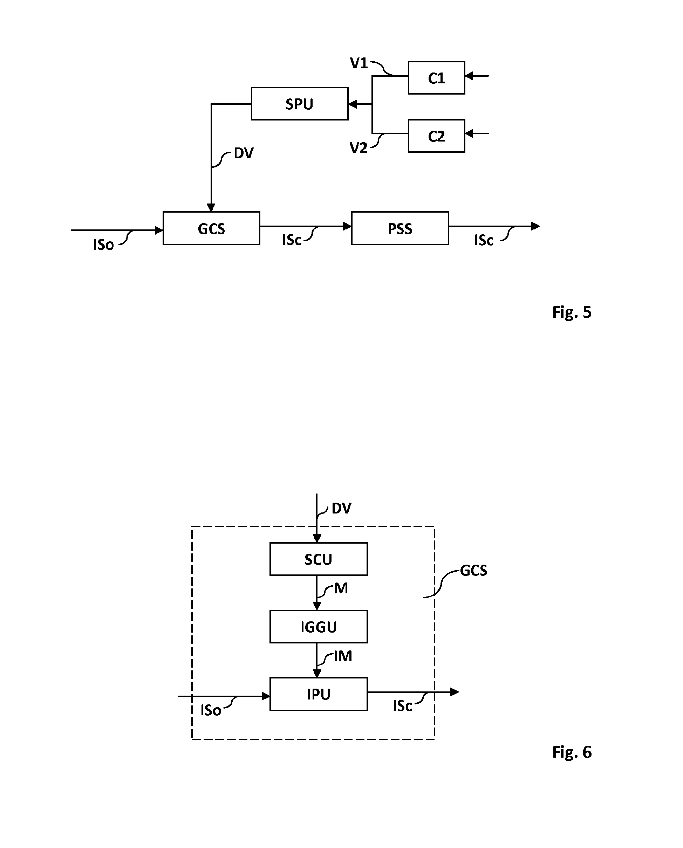

As illustrated by figure 5 showing a functional architecture of the projection unit PU, the computation of the depth view information DV can be performed by a stereoscopic processing unit SPU from data provided by two stereoscopic images V1, V2 of the projection surface PS. These data are data images and can be acquired by the two cameras C1, C2.

This stereoscopic processing unit SPU can implement known technologies of stereopsis or computer stereo vision. Basically, it may implement a 2-step algorithm consisting in:
- identifying a same point within the two stereoscopic images, and
- comparing the location of this same point within the two stereoscopic images.

The first step of identification of same point can be done for instance by using known pattern-matching algorithms.

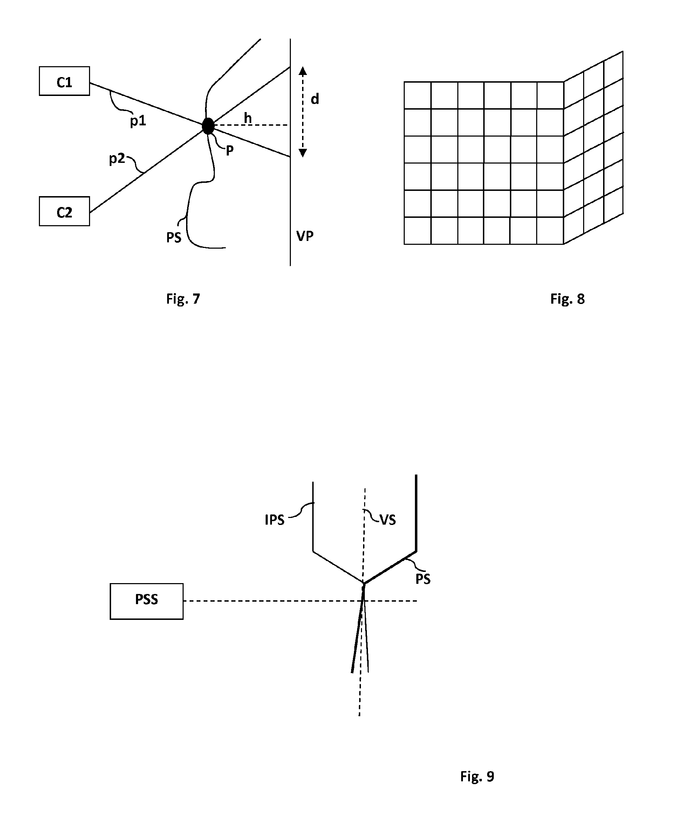

The second step of comparing the location of this point within the 2 images can be better understood in connection with figure 7.

Two stereoscopic cameras C1, C2 take two images of the same scene and, in particular, of a point P of the projection surface PS. As these cameras have different location, they view the point P with different angles. More concretely, the image acquired from the camera C1 shows the point P as projected along the projection line p1 onto a virtual plan VP, whereas the image acquired from the camera C1 shows this same point P as projected along the projection line p2 onto this virtual plan VP.

The distance d between the two projections on the virtual plan VP is directly representative of the depth h. This depth h represents the distance of this point P to this virtual plan VP. As this virtual plan is a parameter which can be arbitrary set, the depth h has only a relative meaning.

This relative meaning is however sufficient to estimate the shape of the projection surface PS, but iterating this process on a sufficient sample of points P. The result of these iterations provides the depth view information DV.

Many other methods and improvements are possible to implement this step of computing depth view information. US2011/0025827, for instance, teaches such a method and describes also the state of the art in this technical domain.

According to an embodiment, a more comprehensive 3D model M of the projection surface PS can be generated from this depth view information DV by determining further parameters.

As seen previously, the depth view information DV contains only relative values h. These values are relevant to each other, so as to estimate a shape of the projection surface PS , but they have no connection with the other elements of the scene, e.g. the projection unit PU. More concretely:
- the depths h are raw values which should be scaled, so as to compare them with the distance between the projection surface and the projector subsystem PSS, and
- this distance should therefore be also determined (with the same scaling factor than the depth view information).

Several mechanisms can be implemented to determine these parameters.

An embodiment of an iterative process to determine them and generate a 3D model M of the projection surface PS is illustrated by figure 4.

This process may be implemented by a Scene Calibration Unit SCU, which can be part of a Geometrical Compensation System illustrated in figure 6. This figure, as well as figure 5, shows however only functional elements and the invention can be actually implemented with various architectural options, according to these functional views, or according to other functional views.

In the figure 4, the reference CS1 represents the step of computing the depth view information DV, for instance from data provided by two stereoscopic images of the projection surface PS.

The step CS2 consists in projecting a mire, or sample image, onto the projection surface. This mire, or sample image, can be projected by the projector subsystem PSS, and its content can be stored in a memory of the projection unit PU. It may be a very simple image with some points or graphical features easy to recognize by image analysis algorithms. It may for instance comprise geometrical elements like squares, circles, etc.

This step CS2 can be performed independently of the step CS1. It means notably that the steps can be performed in sequence (in both orders) or in parallel.

The step CS3 consists in capturing the projected sample image (or mire) on the projection surface PS. The capture can be done by either camera of the stereoscopic cameras C1, C2, or by another camera equipping the projection unit PU, or by both stereoscopic cameras C1, C2.

The projected mire (as captured) is then compared with the original mire (as projected). In an ideal situation, there would be no difference, but due to the shape of the projection surface, notably, the projected mire shows a distortion. This distortion is then captured to determine a measured sample distortion.

The step CS4 consists in determining an initial version of the 3D model M.

The 3D model may be based on a mesh on which the values of the depth view information DV are scaled and mapped. The figure 8 shows a very simple example of a mesh seen from the front (i.e. from the projection unit PU) and "deformed" by the depth view information of a projection surface PS.

Typically, a 3D model M is structured as a set of triangles in the 3D space. For each triangle, the dataset associated to the 3D model can comprise 3 vertices corresponding to each corner of the mesh triangle.

In this particular case where the "object" is a surface, the mesh can be considered, from an abstract point of view, as a 2D array where each 'x,y' point is associated with a depth 'z' data. However, the dataset can remain compliant with the one of "true" 3D objects.

The step CS5 consists in simulating the projection of the sample image (or mire) to the initial version of the 3D model M.

This simulation is a geometrical computing, which can be implemented with the help of software libraries on 3D processing, or by using dedicated hardware circuitries.

For instance, this can be based on a standardized API (Application Programming Interface) like those of the OpenGLES (Open Graphic Library for Embedded Systems) of the Khronos group, more specifically dedicated to mobile terminals like smartphones, tablets, etc.

Computing a projection of an image onto the 3D model of an object beholds to state-of-the-art technologies available to the man skilled-in-the-art. For instance, known technologies comprise the mapping of a texture (here the image to project) onto a 3D object (here, the projection surface as defined by its model M).

The steps CS6 consists in determining the distortion generated by this computed projection and to compare it with the measured sample distortion (determined at step CS3).

If these distortions are equal or if their differences are below a given threshold, the process can stop and the current version of the 3D model can be considered as the final 3D model M.

Otherwise, the process can iterate by refining parameters of the current version of the 3D model, in a step CS7.

In particular, iteration could be done on available parameters (depending on the computation method used) in order to compute the projection like distance between projection center and projection surface, size and position of the input image in the 3D scene.

According to an embodiment, the geometrical compensation unit GCU can also comprise an Inverse Geometry Generation Unit IGGU, as depicted in figure 6.

This functional element is adapted to determine an inverse model from the 3D model M of the projection surface PS.

The inverse model IM is computed by determining first a virtual surface VS and then by performing a simple symmetric inversion of the mesh data of the 3D model M.

This process will be made clearer thanks to the example depicted by figure 9. A projection surface PS (emphasized with bold lines) and the projector subsystem PSS are represented from a top view. A virtual screen VS is defined as the plan surface passing by the intersection of the projection surface PS and the projection axis coming from the projector subsystem and perpendicular to it. This virtual screen VS and the projection axis are shown with dotted lines.

An inverse projection surface IPS can then be determined by computing its inverse 3D model IM from the 3D model M of the projection surface PS.

Knowing the coordinates of the points or elements of the projection surface, such a computing is straightforward and consists in computing the symmetric coordinates using the virtual surface VS as surface of symmetry.

The Geometrical Compensation System GCS may further comprise an Inverse Projection Unit IPU.

This functional element may implement the step S3 represented in figure 3, which consists in applying corrective distortions to an original image ISo to generate a compensated image ISc.

In the general case, the original image is part of an image stream, which can be a video stream or a sequence of still images. In such situations, as shown in the figure 3, the full process can loop from the step S4 (which will be explained later) back to step S2, so as to handle the image stream image by image.

In the case where a single image is to be handled, the process will stop after the first occurrence of the step 4 and not do the loop back.

The nature and content of these images is not relevant to the invention. It can for instance be live movies or animations, slides shows (made of texts, diagrams, photos etc.

Not represented in the figures 5 and 6, a buffer can be inserted upstream in the Geometrical Compensation System GCS or the Inverse Projection Unit IPU.

The Inverse Projection Unit IPU aims at applying corrective distortions to the original image ISo in order to generate a compensated image ISc. The corrective distortions are computed from the 3D model M.

According to an embodiment, the corrective distortions are computed from the inverse 3D model IM, which has previously been computed from the 3D model M.

More precisely, according to an embodiment, the application of the corrective distortions consists in computing the projection of the original image ISo onto an inverse projection surface defined by this inverse 3D model IM.

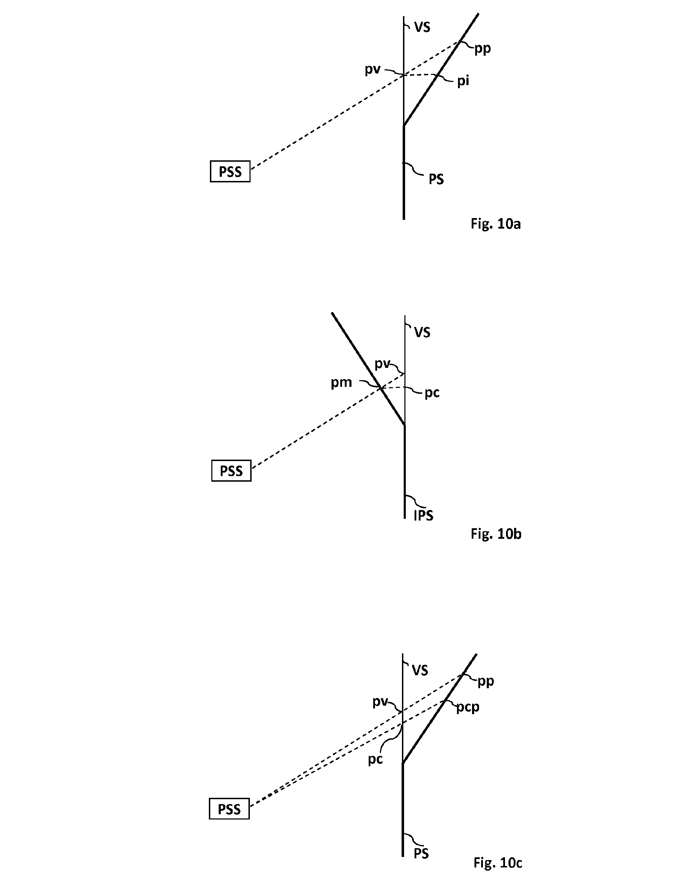

This embodiment will be explained more clearly on an example with the help of the figures 10a, 10b and 10c.

The figure 10a shows the situation when no compensation is implemented.

The projector subsystem PSS projects an image, for which only one point is considered.

If the projection surface were an ideal plan surface, this point would have been projected in the virtual location pv. This ideal plan surface can be represented as the virtual surface VS defined above. This virtual surface can be somehow considered as the only surface which has some reality from the point of view of the projector subsystem PSS: it has no awareness of the real projection surface PS.

As this real projection surface PS has a different shape, it introduces a distortion: the point is projected farer along the same projection line, i.e. at location pp.

However, if we want the image to be displayed without any distortion, this same point should have been projected on the projection surface PS at the ideal location pi. The difference between the projected point pp and the ideal point pi is representative of the distortion.

On figure 10b is represented the inverse projection surface IPS, defined by the inverse 3D model IM.

The projection pm of the same point on the inverse projection surface is computed (i.e. simulated). From this "inverse projected" point pm, it is possible to determine a compensated point pc, as the point of the virtual screen VS where this "inverse projected point" would have been projected if the projection surface were an ideal plan surface. Its location is simply calculated as the perpendicular projection of the inverse projected point pm onto the virtual screen VS.

In other words, the difference in location between the compensated point pc and the virtual location pv represents the distortion due to the shape of the projection surface as seen from the projector subsystem PSS.

As a consequence, the distortion can be compensated when projecting the point by taking into account this difference in the virtual screen VS.

The figure 10c shows on this example how the compensation can occur.

Instead of projecting the point towards the location pv onto the virtual screen VS (which is, again, the only "reality" from the point of view of the projector subsystem PSS), the point is projected towards the compensation location pc. As the real projection surface PS has a difference shape than the virtual screen VS, this point is projected further than this location pc along the projection line, onto the projected compensated location pcp on the projection surface PS.

The point projected at this location pcp will be shown without any distortion by the users.

Applied on all points constituting the original image ISo, a compensated image ISc can be generated. This compensated image ISc can then be projected onto the projection surface PS by the projector subsystem PSS. This step is illustrated by the box S4 on figure 3.

As said earlier, according to an embodiment, this step can be performed by considering the original image ISo as a "texture" that can be mapped on the object defined by the inverse 3D model IM.

Then, as it is known in the art, the mapped object can be rasterized so as to provide a digital image (i.e. an array of pixels) that can be sent to a camera and projected. These steps can be implemented by software or hardware platforms that are available on the market. As they are out of the scope of the invention which is not dependent of any such embodiments, they will not be explained further here.

This embodiment removes all distortions due the shape (and orientation) of the projection surface PS. The distortions have been compensated by computing an "inverse distortion" to the original image so that both distortions cancel each other.

Once the compensated image ISc has been projected, another image can be handled. This iterating aspect is illustrated in figure 3 by the arrow linking the box S4 to the box S2.

The invention has been described with reference to preferred embodiments. However, many variations are possible within the scope of the invention.

For instance, instead of performing the calibration steps CS5-CS7 on the 3D model M in order to tune its parameters, it is possible to determine an inverse 3D model IM directly and then tune the parameters of this inverse model IM. This tuning can be done by comparing the original image ISo with a capture (through camera) of the projected ISc (which is computed projection on IM). Several captures could be needed to complete this calibration phase.

## Claims

1. A method for projecting an image onto a projection surface (PS), said method comprising the steps of:
- generating (S1) a 3D model (M) of said projection surface (PS);
- acquiring (S2) an original image (ISo),
- applying (S3) corrective distortions to said original image (ISo) to generate a compensated image (ISc), said corrective distortions being computed from said 3D model (M), and
- projecting (S4) said compensated image (ISc) onto said projection surface (PS), from a projector subsystem (PSS).

2. The method according to claim 1, wherein said corrective distortions are computed from an inverse model (IM) of said 3D model (M).

3. The method according to claim 2, wherein applying said corrective distortions consists in computing the projection of said original image (ISo) onto a virtual surface defined by said inverse model (IM).

4. The method according to any of previous claims, wherein said 3D model (M) is generated from depth view information (DV) of said projection surface (PS) and a distance between said projector subsystem (PSS) and said projection surface (PS).

5. The method according to claim 4, wherein said depth view information is computed from data provided by two stereoscopic images (V1, V2) of said projection surface (PS).

6. The method according to claim 5, wherein said two stereoscopic images are acquired by two cameras (C1, C2) embedded in a projection unit (PU).

7. The method according to claim 6, wherein said two cameras (C1, C2) are aligned with said projector subsystem (PSS) within the same projection unit (PU).

8. A projection unit (PU) for projecting an image onto a projection surface (PS), comprising:
- a scene calibration unit (SCU) adapted to generate a 3D model (M) of said projection surface (PS),
- a geometrical compensation system (GCS) for acquiring an original image (ISo) and applying corrective distortions to said original image to generate a compensated image (ISc), said corrective distortions being computed from said 3D model (M), and
- a projector sub-system (PSS) for projecting said compensated image (ISc) onto said projection surface (PS).

9. The projection unit according to claim 8, wherein said geometrical compensation system (GCS) is adapted to compute said corrective distortions from an inverse model (IM) of said 3D model (M).

10. The projection unit according to claim 8 or 9, further comprising two cameras (C1, C2) adapted to acquire two stereoscopic images (V1, V2) of said projection surface (PS), and a stereoscopic processing unit (SPU) for computing depth view information (DV) of said projection surface (PS) from data provided by said two stereoscopic images (V1, V2), and wherein said scene calibration unit (SCU) is adapted to generate said 3D model (M) from said depth view information and a distance between said projector unit (PU) and said projection surface (PS).

11. The projection unit according to claim 10, wherein said Geometrical compensation system comprises an inverse geometry generation unit (IGGU) to compute an inverse model (IM) of said 3D model (M) and an inverse projection unit (IPU) to compute the projection of said original image (ISo) onto a virtual surface defined by said inverse model.

12. The projection unit according to claim 10 or 11 wherein said two cameras (C1, C2) are aligned with said projector subsystem (PSS).

13. A mobile terminal, comprising the projection unit according to any of claims 8 to 11.

14. A computer program product comprising a computer readable medium, having thereon a computer program comprising program instructions, the computer program being loadable into a data-processing unit and adapted to cause execution of the method according to any of claims 1 to 7 when the computer program is run by the data-processing unit.

15. A data storage medium having recorded thereon a computer program comprising instructions for performing the method according to any of claims 1 to 7.
